(19)

Europäisches Patentamt
European Patent Office
Office européen des brevets

(11) **EP 4 523 830 A1**

(12) **EUROPEAN PATENT APPLICATION**
published in accordance with Art. 153(4) EPC

(43) Date of publication:
19.03.2025 Bulletin 2025/12

(21) Application number: 23823142.7

(22) Date of filing: 13.06.2023

(51) International Patent Classification (IPC):
*B23K 26/00* (2014.01)    *B23K 26/362* (2014.01)
*C21D 1/26* (2006.01)    *C21D 6/00* (2006.01)
*C21D 8/12* (2006.01)    *C21D 9/00* (2006.01)
*C22C 38/00* (2006.01)    *C22C 38/02* (2006.01)
*C22C 38/04* (2006.01)    *H01F 1/18* (2006.01)

(52) Cooperative Patent Classification (CPC):
B23K 26/00; B23K 26/362; B23Q 15/00;
C21D 1/26; C21D 6/00; C21D 8/12; C21D 9/00;
C22C 33/04; C22C 38/00; C22C 38/02;
C22C 38/04; C22C 38/06; C23C 22/33; H01F 1/18;
H01F 27/245

(86) International application number:
PCT/CN2023/099929

(87) International publication number:
WO 2023/241574 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.06.2022 CN 202210691031

(71) Applicant: BAOSHAN IRON & STEEL CO., LTD.
Shanghai 201900 (CN)

(72) Inventors:
• WU, Meihong
  Shanghai 201900 (CN)
• LI, Guobao
  Shanghai 201900 (CN)

• SHEN, Kanyi
  Shanghai 201900 (CN)
• JIANG, Quanli
  Shanghai 201900 (CN)
• YANG, Yongjie
  Shanghai 201900 (CN)
• ZHAO, Zipeng
  Shanghai 201900 (CN)
• HU, Zhuochao
  Shanghai 201900 (CN)
• JI, Yaming
  Shanghai 201900 (CN)
• ZHANG, Huabing
  Shanghai 201900 (CN)

(74) Representative: Maiwald GmbH
Elisenhof
Elisenstraße 3
80335 München (DE)

(54) **METHOD FOR MANUFACTURING LOW-MAGNETOSTRICTION ORIENTED SILICON STEEL PLATE, AND ORIENTED SILICON STEEL PLATE**

(57) Disclosed is a manufacturing method for a low-magnetostriction oriented silicon steel plate, comprising the steps of: (a) smelting and casting; (b) heating; (c) normalizing; (d) cold rolling; (e) decarburization annealing; (f) final annealing; and (g) hot stretch annealing comprising applying insulating coating. A coating amount difference between insulating coatings is determined according to a deflection difference between two surfaces of a silicon steel substrate subjected to single-sided laser etching in step (g); then according to the coating amount difference, the insulating coatings are formed on the two surfaces of the silicon steel substrate manufactured in steps (a)-(f), the coating amount difference between the insulating coatings on the two surfaces meeting the coating amount difference. Also disclosed is an oriented silicon steel plate manufactured by the above-mentioned method.

EP 4 523 830 A1

Figure 1

# EP 4 523 830 A1

**Description**

## TECHNICAL FIELD

The present invention relates to a steel plate and manufacturing method therefor, particularly to an oriented silicon steel plate and manufacturing method therefor.

## BACKGROUND

Currently, transformer cores are made by laminating or winding grain-oriented silicon steel (GOSS). In transformer production and downstream users, the main performance indicators of transformers focus on no-load loss characteristics and no-load excitation current characteristics, which correspond to the loss and the excitation power characteristics of oriented silicon steel.

The loss characteristic of the oriented silicon steel depends on hysteresis loss influenced by the orientation degree of the finished product's crystals and its purity, classical eddy current loss influenced by thickness and resistivity, and abnormal eddy current loss influenced by the width of the magnetic domain. Therefore, in the prior art, the methods for reducing loss characteristics comprise increasing the orientation degree of the finished GOSS to increase magnetic flux, thereby reducing the hysteresis loss; increasing the electrical resistivity by increasing the Si content or reducing steel thickness to lower classical eddy current loss; and reducing magnetic domain width by etching, thereby reducing the abnormal eddy current loss.

With the continuous improvement in production process and technology for the oriented silicon steel, the grain orientation degree of industrial oriented silicon steel products have gradually approached its limits. Further thickness reduction will significantly increase costs and technical difficulties of production. Meanwhile, due to the coarse grains in high magnetic induction oriented silicon steel products, introducing local residual stress on the surface of the steel plate by laser etching reduces the 180° primary domain spacing along the rolling direction, effectively reducing abnormal eddy current loss. This is currently a convenient and economical method for reducing iron loss in high magnetic induction oriented silicon steel.

In recent years, as societal demand for noise reduction has increased, transformer manufacturers and downstream users are paying more attention to the noise performance of transformers. The noise performance of the transformer has become as important as as no-load loss. With the continuous optimization of processing techniques and transformer design, magnetostriction of the oriented silicon steel has become a main source of transformer noise.

During alternating excitation, the dimensional changes in finished oriented silicon steel plates caused by magnetization are known as magnetostriction, a primary source of transformer noise. The mechanism behind magnetostriction in oriented silicon steel is the change and rotation of 90° magnetic domains of the easy magnetization direction perpendicular to the rolling direction during the magnetization process. Ideally, oriented silicon steel has only 180° magnetic domains, but due to orientation deviation, inclusions, grain boundaries, and other defects, small supplementary domains known as prism-shaped closure domains (90° domains) appear between the 180° domains to reduce static magnetic energy, increasing the magnetostriction of the finished product. Thus, reducing 90° domains (closure domains) can effectively reduce magnetostriction.

In the prior art, the main methods used to reduce magnetostriction comprise: (1) improving the orientation degree of the finished crystals; (2) reducing the thickness of the finished product; (3) increasing the tension of coatings. These methods can reduce the magnetostriction of finished oriented silicon steel sheets, thereby achieving a reduction of the transformer noise level.

Chinese patent document with a publication number of CN107210109A, a publication date of Sep. 27, 2017, and a title of "Oriented Electromagnetic Steel Plate, Manufacturing Method Therefor, And Prediction Method for Transformer Noise Characteristics", discloses an oriented electromagnetic steel plate, a manufacturing method therefor, and a prediction method for the transformer noise characteristics. For the magnetostriction characteristics of the oriented electromagnetic steel plate, this patent discloses that by controlling a front/rear difference in tension of the forsterite film is 0.5 MPa or more, and a front/rear difference in total tension of the forsterite film and the insulating coating is less than 0.5 MPa, by setting the number of acceleration/deceleration points that are present in a magnetostriction velocity level $d\lambda/dt$ in one period of magnetostriction vibration to 4, and by setting velocity level change in an acceleration zone or deceleration zone of magnetostriction vibration in terms of the difference between adjacent local maximum and minimum values to to $3.0 \times 10^{-4}$ sec$^{-1}$ or less, the magnetostriction characteristics can be reduced. However, this method, in which the tension difference between the forsterite coatings and the total tension difference between the forsterite coatings and the insulating coatings are adjusted, provides limited improvement for the double-sided magnetostriction difference in single-sided laser scored oriented silicon steel substrates, and it is difficult to control, making it challenging to produce oriented electromagnetic steel plates with excellent noise characteristics and minimal magnetostriction deviation between the upper and lower surfaces in bulk, stably, and at a reasonable cost.

Chinese patent document with a publication number of CN106460111A, a publication date of Feb. 22, 2017, and a title of "Grain-Oriented Electromagnetic Steel Plate with Low Iron Loss and Low-magnetostriction", discloses an oriented electromagnetic steel plate with low iron loss and low-magnetostriction. The grain-oriented electrical steel sheet comprises: a base steel sheet, a primary film formed on a surface of the base steel sheet, and a tension insulating coating formed on a surface of the primary film, wherein the coating satisfies the following conditions: the ratio between the thickness of the tension insulating coating and the thickness of the primary film is 0.1 or higher and 3.0 or lower, the thickness of the tension insulating coating is 0.5 $\mu$m or greater and 4.5 $\mu$m or smaller, and the total tension applied to the base steel sheet from the primary film and the tension insulating coating is 1 MPa or higher and 10 MPa or lower. Magnetic domain control is achieved by irradiating the surface of the tension insulating coating with a laser. From the grain-oriented electrical steel sheet, strip-like samples having a length of 300 mm in the direction parallel to the rolling direction and a length of 60 mm in the direction parallel to the transverse direction were extracted, and one surface of the sample or both surfaces of the sample was pickled. By pickling the samples, a range from the surface of the tension insulating coating to a depth position of 5 $\mu$m toward the base steel sheet side from the interface between the base steel sheet and the primary film was removed. Thereafter, the warpage amount of the tip end of each of the samples was measured. In this case, the warpage amount satisfies specified conditions. However, this method only considers the thickness and tension of the primary coatings and the tension insulating coatings, offering limited improvement in the magnetostriction of the oriented silicon steel substrates. This process is difficult to control and cannot produce oriented electromagnetic steel plates with excellent noise characteristics and minimal magnetostriction deviations between upper and lower surfaces in bulk, stably, and at a reasonable cost.

Chinese patent document with a publication number of CN106029917A, a publication date of Oct. 12, 2016, and a title of "Grain-Oriented Electrical Steel Sheet for Low-Noise Transformer, and Method for Manufacturing Said Sheet", discloses an oriented electromagnetic steel plate, which is obtained by irradiating a steel sheet surface with an electron beam having a beam diameter d of 0.40 mm or less in a line region extending in a direction intersecting a rolling direction, wherein the modulated irradiation line region is formed with repeating units connected to each other in the line region direction, a periodic distance of the repeating units in the modulated irradiation line region is $\frac{2}{3} \times d$ mm - $2.5 \times d$ mm, a repeating interval of the modulated irradiation line region in the rolling direction is 4.0 mm - 12.5 mm. The intensity of the electron beam is not lower than an intensity with which long and narrow divided magnetic domains extending in the modulated irradiation line region direction are formed at least on an irradiated side, and not higher than an intensity with which coating damage does not occur and a plastic strain region is not formed on the irradiated side. Therefore, it is possible to carry out magnetic domain refining treatment under a condition which achieves both low iron loss and low noise of the transformer. However, this method only considers the influence of etching conditions on the magnetostriction and does not take into account the matching of the etching conditions and the coating conditions, so it is difficult to effectively produce oriented electromagnetic steel plates with excellent noise characteristics and small magnetostriction deviations between upper and lower surfaces in a batch, stable, and cost-effective manner.

**SUMMARY**

One objective of the present invention is to provide a manufacturing method for low magnetostriction oriented silicon steel plate. This method addresses the issue in existing technology where thin-gauge oriented silicon steel plate, processed with laser scribing for low loss, suffers from uneven stress distribution due to single-sided laser scribing. This causes the steel plate to bend toward the etched surface, leading to an excessive magnetostriction deviation between the etched surface and non-etched surface of the oriented silicon steel.

To achieve the above-mentioned objective, the present invention provides a method for manufacturing a low-magnetostriction oriented silicon steel plate, comprising the following steps:

(a) smelting and casting; (b) heating; (c) normalizing; (d) cold rolling; (e) decarburization annealing; (f) final annealing; (g) hot stretch annealing comprising applying an insulating coating; wherein the step (g) comprises:

(1) applying an insulating coating component onto two surfaces of a silicon steel substrate A with an equal coating amount V;

(2) sintering and cooling, forming an insulating coating on each of the two surfaces of the silicon steel substrate A;

(3) performing single-sided laser etching on one surface of the silicon steel substrate A with insulating coatings, defining the surface single-sided laser etched as a first surface, and defining the surface opposite to the first surface as a second surface;

(4) measuring a deflection difference between the first surface and the second surface, and determining a coating amount difference $\Delta V$ between the insulating coatings based on the deflection difference; and

(5) based on the coating amount difference $\Delta V$, forming the insulating coatings on two surfaces of the silicon steel substrate B produced via steps (a)-(f), wherein a coating amount of the insulating coating on a surface to be laser etched is V, and a coating amount of the insulating coating on a surface that do not undergo laser etching is V+|ΔV|.

In the technical scheme of the present invention, the process of the above-mentioned step (g) has been optimized by firstly applying insulating coating components onto two surfaces of a silicon steel substrate A in equal coating amounts, and then sintering and cooling, forming an insulating coating on each surface of the silicon steel substrate A. The steps of sintering and cooling can be carried out according to the existing techniques to ensure that an insulating coating of equal thickness is formed on both surfaces of the silicon steel substrate A.

In the technical scheme of the present invention, for the silicon steel substrate with the insulating coatings of equal thickness on two surfaces, based on the improvement rate of iron loss $P_{17/50}$ and magnetostriction before and after laser etching, the power of laser etching can be optimized. By detecting the deflection (i.e. the distance from the center of the end face of the bent the steel plate to the axis of the steel plate when unbent) difference between the first surface with laser etching and the second surface without laser etching on the silicon steel substrate with equal coating amounts on two surfaces, the coating amount difference ΔV between the insulating coatings can be determined based on this deflection difference. According to the coating amount difference ΔV, an insulating coating is formed on two surfaces of the silicon steel substrate B produced through steps (a)-(f), wherein the coating amount of the insulating coating on an etched side is V, and the coating amount of the insulating coating on a non-etched side is V+|ΔV|. The composition and manufacturing processes for the above-mentioned silicon steel substrates A and B are identical.

A silicon steel substrate that meets the coating amount difference ΔV for the insulating coatings can maintain flatness and exhibit a good magnetostriction performance after laser etching. By adjusting the coating amount difference between the etched and non-etched surfaces, the coating tension difference can be adjusted, which can effectively reduce the deflection difference between the etched surface and non-etched surface of the finished oriented silicon steel product caused by uneven stress distribution due to single side laser etching, thereby reducing the magnetostriction deviation between the etched surface and the non-etched surface.

Single side laser etching on the silicon steel substrate with the insulating coatings is a common practice of refining magnetic domains of the oriented silicon steel and reducing losses in the prior art. Thus, the practical application prospects of the manufacturing method designed by the present invention are extensive.

Preferably, in the above-mentioned step (4), the coating amount difference between the insulating coatings on the first surface and the second surface = 3 × 10⁻⁵ - 0.407 × deflection difference ± 0.1; more preferably, the coating amount difference between the insulating coatings = 3 × 10⁻⁵ - 0.407 × deflection difference, wherein the unit of the coating amount difference between the insulating coatings is g/m², and the unit of the deflection difference is mm.

Preferably, in the manufacturing method of the present invention, in step (3), the laser power X for the single-sided laser etching is determined based on the following formula:

set magnetostriction target value = -0.0006 × X⁵ + 0.012 × X⁴ - 0.04 × X³ - 0.18 × X² + 0.37 × X + 54.8; and/or,
set improvement rate of iron loss $P_{17/50}$ before and after laser etching = -0.177 × X² + 3.2 × X - 2.4;
wherein, the unit of the magnetostriction target value is db(A), and the unit of the laser power is mJ/mm².

Preferably, in the manufacturing method of the present invention, the composition of the insulating coating components comprises:

at least one selected from aluminum dihydrogen phosphate and magnesium dihydrogen phosphate: 2%-25%;
colloidal SiO₂: 4%-16%;
chromic anhydride: 0.15%-4.50%; and
the balance being water and inevitable impurities.

In the above-mentioned manufacturing method of the present invention, the insulating coating can be used to improve the insulating properties on the the silicon steel substrate surfaces. The composition used to form the insulating coating of the present invention can use an insulating coating solution used widely in prior art, which is an aqueous solution mainly composed of chromic anhydride, colloidal SiO₂, and phosphates of magnesium and aluminum. This insulating coating solution forms a transparent insulating coating on the surface of the silicon steel substrate after being sintered, allowing the laser to directly reach the surface of the silicon steel substrate during the subsequent laser etching process.

Preferably, in the manufacturing method of the present invention, in step (1), the coating amount of the insulating coating components on both surfaces of the silicon steel substrate is between 4.0-4.5 g/m².

In the present invention, it is preferred to control the coating amount of the insulating coating components on both surfaces of the silicon steel substrate within 4.0-4.5 g/m². If the coating amount is less than 4.0 g/m², the insulating coating is too thin, providing insufficient the tension on the silicon steel substrate and inadequate magnetic optimization. Conversely, if the coating amount is greater than 4.5 g/m², the insulating coating is too thick, which not only affects the lamination factor of the finished product, but also easily causes defects such as powder falling and white edges during shearing processes.

Preferably, in the manufacturing method of the present invention, in step (b): firstly, heating the silicon steel substrate to 800-900°C and holding for 10-30 seconds, then cooling it to room temperature at a cooling rate of 5-50°C/s.

Preferably, in the manufacturing method of the present invention, in step (c), adopting a two-stage normalizing treatment: firstly, heating the steel plate to 1100-1200°C, then cooling it to 900-1000°C at a cooling rate of 1-10°C/s; and subsequently cooling it to room temperature at a cooling rate of 10-70°C/s.

Preferably, in the manufacturing method of the present invention, in step (d), cold rolling is performed using one-step cold reduction or double cold reduction with an intermediate annealing step.

Preferably, in the manufacturing method of the present invention, in step (e), a primary recrystallization annealing is performed at 800-900°C, followed by the application of an annealing isolation agent. Before the finished product annealing in step (f), an annealing isolation agent such as magnesium oxide is applied to the surface of the silicon steel substrate, preventing the steel plates from bonding during the subsequent high-temperature annealing environment.

Preferably, in the manufacturing method of the present invention, in step (f), an annealing temperature is 1100-1200°C, with a holding time of 20-30 hours.

Another objective of the present invention is to provide a low-magnetostriction oriented silicon steel plate, where the magnetostriction deviation between the etched surface and the non-etched surface after single-sided laser etching is minimal, and it has good average magnetostriction. An iron core made from this low-magnetostriction oriented silicon steel plate generates low vibration, resulting in a low overall noise level for transformers using this iron core.

To achieve the above-mentioned objective, the present invention proposes a low-magnetostriction oriented silicon steel plate manufactured by the above-mentioned manufacturing method.

Preferably, the thickness of the finished oriented silicon steel plate product prepared by the present invention is 0.18mm-0.23mm.

In the present invention, it is generally preferred to control the thickness of the finished low-magnetostriction oriented silicon steel plate product to be within 0.18mm-0.23mm. When the finished product thickness of the steel plate is greater than 0.23mm, increased thickness and stiffness make it less sensitive to uneven stress distribution due to laser scribing, even after forming an insulating coating on the surface.

Preferably, in the oriented silicon steel plate of the present invention, the magnetostriction deviation between the etched surface and the non-etched surface of the low-magnetostriction oriented silicon steel plate is ≤ 2db(A), and the average magnetostriction of the low-magnetostriction oriented silicon steel plate is ≤ 55db(A).

Compared to the prior art, the manufacturing method for the low-magnetostriction oriented silicon steel plate and the oriented silicon steel plate according to the present invention have the following advantages and beneficial effects: The manufacturing method for the low-magnetostriction oriented silicon steel plate according to the present invention can solve the problem of excessive magnetostriction deviation between the etched and non-etched surfaces of the oriented silicon steel due to uneven stress distribution introduced by single-sided laser etching, which causes the steel plate to bend toward the etched surface.

By using the manufacturing method of the present invention, a silicon steel substrate with equal coating amounts on both insulating layers can be etched. The tension difference between the insulating coatings on the etched surface (first surface) and non-etched surface (second surface) can be determined based on the deflection difference between these two surfaces, allowing adjustment of the coating amount difference to reduce magnetostriction deviation between the insulating coatings on the etched surface and non-etched surface of the oriented silicon steel.

In the present invention, the prepared low-magnetostriction oriented silicon steel plate can achieve a magnetostriction deviation of ≤ 2db (A) between the etched surface and the non-etched surface, and an average magnetostriction deviation of ≤ 55db (A). An iron core made from this low-magnetostriction oriented silicon steel plate generates low vibration, leading to a low overall noise level for transformers using this core, presenting excellent practical applications.

**BRIEF DESCRIPTION OF THE DRAWINGS**

Figure 1 schematically shows a curve of magnetostriction and magnetic improvement rate of the etched surface of the low-magnetostriction oriented silicon steel plate according to the present invention, as a function of energy density of laser etching.

Figure 2 schematically shows a curve of the deflection difference between the etched surface and the non-etched surface with equal coating amounts on both insulating coatings after single-sided laser etching is performed on the silicon steel substrate, as a function of energy density of laser etching.

Figure 3 schematically shows a coating amount difference in the insulating coatings between the etched surface and the non-etched surface required to remain flat for the low-magnetostriction oriented silicon steel according to the present invention under different deflection differences.

## DETAILED DESCRIPTION

The following provides further explanation and illustration of the manufacturing method and oriented silicon steel plate with low magnetostriction described in the present invention, through specific embodiments and drawings. However, this explanation does not unduly limit the technical scope of the invention.

### Examples 1-6 and Comparative Examples 1-4

The low-magnetostriction oriented silicon steel plates of Examples 1-6 and the comparative oriented silicon steel plates of Comparative Examples 1-4 were manufactured using the following steps:

(a) smelting according to the chemical composition shown in Table 1, and casting into a slab.
(b) heating: heating the slab to 1200-1280°C, holding for 1-4 hours, and hot-rolling it into a steel strip.
(c) normalizing: adopting a two-stage normalizing treatment, firstly heating the steel strip to 1100-1200°C, and then cooling it to 900-1000°C at a rate of 1°C/s-10°C/s; subsequently cooling it to room temperature at a cooling rate of 10°C/s to 70°C/s.
(d) cold rolling: performing a one-step cold reduction or double cold reduction with an intermediate annealing step.
(e) decarbonization annealing: performing a primary recrystallization annealing at a temperature of 800-900°C, and then applying an annealing isolation agent.
(f) final annealing: annealing at a temperature of 1100-1200°C, holding for 20-30 hours.
(g) applying insulating coating to annealed silicon steel substrate A and hot stretch annealing to prepare an oriented silicon steel plate with a thickness of 0.18mm-0.23mm:
**In** step (g), first, applying equal amounts of the insulating coating components onto both surfaces of a silicon steel substrate A. Then, sintering and cooling, by heating the steel plate to 800-900°C and holding it for 10-30 seconds, then cooling it to room temperature at a rate of 5°C/s-50°C/s to obtain a silicon steel substrate with the insulating coatings.

Single-sided laser etching is applied to one surface of a silicon steel substrate coated with the insulating coatings, with the surface undergone single-sided laser etching defined as the first surface and the surface opposite the first surface defined as the second surface. Measure the deflection difference between the first surface and the second surface and determine the coating amount difference $\Delta V$ between the insulating coatings on the etched and non-etched surfaces of the silicon steel substrate based on the deflection difference. Then, according to the coating amount difference, an insulating coating is formed on the surface of the silicon steel substrate B manufactured through steps (a) - (f), where the non-etched surface has a greater coating amount than the etched surface, satisfying the required coating amount difference $\Delta V$.

It should be noted that in the present invention, in the above-mentioned step (g), the laser power X for single-sided laser etching can be determined by either a set magnetostriction target value or a set improvement rate of iron loss $P_{17/50}$ before and after laser etching. The set magnetostriction target value = $-0.0006 \times X^5 + 0.012 \times X^4 - 0.04 \times X^3 - 0.18 \times X^2 + 0.37 \times X + 54.8$. The set improvement rate of iron loss $P_{17/50}$ before and after laser etching = $-0.177 \times X^2 + 3.2 \times X - 2.4$. In these formulas, the unit of the magnetostriction target value is db(A), and the unit of the laser power is mJ/mm$^2$.

Correspondingly, the coating amount difference between the insulating coatings on the surface to be etched and the non-etched surface of the silicon steel substrate is determined based on the following formula: coating amount difference between the insulating coatings = $3 \times 10^{-5} - 0.407 \times$ deflection difference $\pm 0.1$, preferably, the coating amount difference = $3 \times 10^{-5} - 0.407 \times$ deflection difference, wherein the unit of the coating amount difference between the insulating coatings is g/m$^2$ and the unit of the deflection difference is mm.

It should be noted that in the present invention, the operations and specific manufacturing parameters of the low-magnetostriction oriented silicon steel plates in Examples 1-6 according to the present invention meet the technical requirements of the present invention, while the comparative oriented silicon steel plates in Comparative Examples 1-4 do not control the coating amount difference between the corresponding insulating coatings based on the deflection difference between the etched surface and non-etched surface caused by laser etching.

Table 1 lists the mass percentages of each chemical element in the low-magnetostriction oriented silicon steel plates in Examples 1-6 and the comparative oriented silicon steel plates in Comparative Examples 1-4.

Table 1.(wt%, the balance being Fe and inevitable impurities)

| No. | C | Si | Mn | Als | N |
|---|---|---|---|---|---|
| Example 1 | 0.061 | 3.25 | 0.011 | 0.026 | 0.0083 |
| Example 2 | 0.060 | 3.24 | 0.020 | 0.027 | 0.009 |
| Example 3 | 0.065 | 3.12 | 0.017 | 0.0288 | 0.0087 |

(continued)

| No. | C | Si | Mn | Als | N |
|---|---|---|---|---|---|
| Example 4 | 0.055 | 3.19 | 0.012 | 0.029 | 0.0079 |
| Example 5 | 0.058 | 3.15 | 0.022 | 0.0296 | 0.0089 |
| Example 6 | 0.067 | 3.30 | 0.025 | 0.0292 | 0.0092 |
| Comparative Example1 | 0.061 | 3.33 | 0.009 | 0.0274 | 0.0088 |
| Comparative Example2 | 0.063 | 3.28 | 0.022 | 0.0281 | 0.0080 |
| Comparative Example3 | 0.066 | 3.21 | 0.015 | 0.0291 | 0.0084 |
| Comparative Example4 | 0.058 | 3.29 | 0.018 | 0.0268 | 0.0078 |

In the present invention, to obtain a low-magnetostriction oriented silicon steel with target performance, the operator need to apply laser etching on one surface of the silicon steel substrate A with consistent coating amount of the insulating coatings on both sides. Then, measure the deflection difference between the first surface and the second surface caused by laser etching and determine the coating amount difference between the insulating coatings on the surface to be etched and the non-etched surface of the silicon steel substrate based on the deflection difference. Then, based on the coating amount difference, adjust the coating amounts of the surface to be etched and the non-etched surface of the silicon steel substrate B prepared through steps (a) - (f), so that the coating amount difference between the surface to be etched and the non-etched surface of the silicon steel substrate B meets the calculated coating amount difference, thus obtaining a low-magnetostriction oriented silicon steel.

It should be noted that, in the present embodiment, the insulating coating components applied to the low-magnetostriction oriented silicon steel plates in Examples 1-6 and the comparative oriented silicon steel plates in Comparative Examples 1-4 comprises, in percentage by mass, the following: at least one selected from aluminum dihydrogen phosphate and magnesium dihydrogen phosphate: 2%-25%; colloidal $SiO_2$: 4%-16%; chromium anhydride: 0.15%-4.50%; the balance is water and inevitable impurities.

Table 2 lists the specific chemical composition of the insulating coating conponents applied on the surfaces of the low-magnetostriction oriented silicon steel plates in Examples 1-6 and the comparative oriented silicon steel plates in Comparative Examples 1-4.

Table 2.(wt%, the balance being Fe and inevitable impurities)

| No. | Aluminum dihydrogen phosphate | Magnesium dihydrogen phosphate | Colloidal $SiO_2$ | Chromic anhydride |
|---|---|---|---|---|
| Example 1 | 2% | 0 | 4% | 0.15% |
| Example 2 | 0 | 2% | 8% | 1% |
| Example 3 | 4% | 4% | 10% | 2% |
| Example 4 | 8% | 8% | 14% | 3% |
| Example 5 | 25% | 0 | 16% | 4% |
| Example 6 | 0 | 25% | 16% | 4.5% |
| Comparative Example 1 | 12% | 0 | 16% | 4.5% |
| Comparative Example 2 | 0 | 8% | 10% | 2% |
| Comparative Example 3 | 10% | 10% | 15% | 3% |
| Comparative Example 4 | 10% | 5% | 15% | 2% |

Table 3-1 lists the specific process parameters used in manufacturing the low-magnetostriction oriented silicon steel plates in Examples 1-6 and the comparative oriented silicon steel plates in Comparative Examples 1-4.

Table 3-1.

| No. | Step (c) | | | | | Step (e) | Step (f) | | Step (g) | | | |
|---|---|---|---|---|---|---|---|---|---|---|---|---|
| | Heating tempera ture (°C) | First cooling rate (°C/s) | Temperature after first cooling (°C) | Second cooling rate (°C) | Temperatur e after cooling (°C) | Temperature of primary recrystallizat ion annealing (°C) | Anneali ng tempera ture (°C) | Holding time (h) | Coating amount on both surfaces (g/m$^2$) | Heating tempera ture (°C) | Holding time (s) | Cooling rate (°C/s) |
| Example 1 | 1110 | 2 | 900 | 10 | 20 | 800 | 1100 | 30 | 4.1 | 900 | 10 | 5 |
| Example 2 | 1120 | 4 | 930 | 20 | 20 | 820 | 1150 | 25 | 4 | 850 | 20 | 10 |
| Example 3 | 1140 | 5 | 930 | 30 | 20 | 840 | 1200 | 20 | 4.2 | 800 | 30 | 30 |
| Example 4 | 1150 | 8 | 950 | 40 | 20 | 810 | 1100 | 30 | 4.3 | 900 | 10 | 50 |
| Example 5 | 1120 | 9 | 940 | 55 | 20 | 875 | 1150 | 25 | 4.2 | 850 | 20 | 40 |
| Example 6 | 1200 | 3 | 1000 | 60 | 20 | 900 | 1200 | 20 | 4.5 | 800 | 30 | 20 |
| Comparative Example 1 | 1120 | 3 | 920 | 20 | 20 | 825 | 1100 | 30 | 4.5 | 900 | 10 | 10 |
| Comparative Example 2 | 1140 | 4 | 940 | 20 | 20 | 830 | 1150 | 25 | 4.5 | 850 | 20 | 7 |
| Comparative Example 3 | 1150 | 10 | 930 | 15 | 20 | 830 | 1200 | 20 | 4.5 | 800 | 30 | 20 |
| Comparative Example 4 | 1110 | 2 | 900 | 12 | 20 | 805 | 1200 | 20 | 4.5 | 800 | 30 | 40 |

Table 3-2 lists the power of single-sided laser etching on the silicon steel substrate A of Examples 1-6 and comparative steel plates of Examples 1-4, the deflection difference between the two surfaces of the silicon steel substrate, the coating amount difference between the insulating coatings on the surface to be etched and non-etched surface, and the coating amount of the insulating coatings on the surface to be etched and the non-etched surface of the final oriented silicon steel B.

Table 3-2.

| No. | Laser power X of laser etching $(mJ/mm^2)$ | Deflection difference (mm) | Coating amount of the insulating coating on the surface to be etched $(g/m^2)$ | Coating amount of the insulating coating on the non-etched surface $(g/m^2)$ | Coating amount difference between the insulating coatings on the surface to be etched and the non-etched surface $(g/m^2)$ | Thickness H of finished oriented silicon steel plate (mm) |
|---|---|---|---|---|---|---|
| Example 1 | 0.5 | 2.1 | 4.1 | 5 | -0.9 | 0.23 |
| Example 2 | 1 | 3.3 | 4 | 5.3 | -1.3 | 0.2 |
| Example 3 | 1.5 | 4.1 | 4.2 | 5.9 | -1.7 | 0.18 |
| Example 4 | 2 | 4.6 | 4.3 | 6.2 | -1.9 | 0.23 |
| Example 5 | 2.2 | 4.7 | 4.2 | 6.1 | -1.9 | 0.2 |
| Example 6 | 2.5 | 4.9 | 4.5 | 6.5 | -2.0 | 0.18 |
| Comparative Example 1 | 0.5 | 2.1 | **_4.5_** | **_4.5_** | 0 | 0.23 |
| Comparative Example 2 | 1 | 3.3 | **_4.5_** | **_4.5_** | 0 | 0.23 |
| Comparative Example 3 | 2 | 4.7 | **_4.5_** | **_4.5_** | 0 | 0.2 |
| Comparative Example 4 | 2.5 | 4.9 | **_4.5_** | **_4.5_** | 0 | 0.18 |

From Tables 3-1 and 3-2, it can be observed that the first surface and the second surface of the silicon steel substrate A were applied with equal amounts of the insulating coating components. After the first surface is subjected to single-sided laser etching, the deflection difference between the first surface and the second surface was measured. Based on the deflection difference, the coating amount difference between the insulating coatings on the surface to be etched and the non-etched surface of the silicon steel substrate was determined. According to the coating amount difference, the coating amounts between the surface to be etched and the non-etched surface of the silicon steel substrate B prepared through steps (a) - (f) were then adjusted to ensure that the non-etched surface of the silicon steel substrate B has a greater insulating coating amount than the surface to be etched, and that the coating amount difference between the surface to be etched and the non-etched surface of the silicon steel substrate B met the calculated coating amount difference.

The deflections on the first surface and the second surface of the silicon steel substrate in Examples 1-6 and Comparative Examples 1-4 were tested according to YB/T 4292-2012 to obtain the deflection difference.

Samples from the low-magnetostriction oriented silicon steel plates of Examples 1-6 and the comparative oriented silicon steel plates of Comparative Examples 1-4 were measured for magnetostriction performance (a magnetostrictive velocity sound pressure level LvA) under the conditions of B=1.7T and f=-2MPa (under the actual operating conditions of the transformer, oriented silicon steel is subjected to compressive stress of 2-3MPa) using a non-contact laser Doppler vibrometer TD9600. The specific measurement method refers to the IEC (International Electrotechnical Commission) technical report-IEC/TP 62581. Iron loss $P_{17/50}$ represents the iron loss of a 1 kg sample at a magnetic flux intensity of 1.7T and a frequency of 50Hz, measured according to the national standard GB/T 3655-2008 "Method for measuring the magnetic properties of electrical steel sheet and strip by means of an Epstein frame". The test results of the magnetostriction performance of each example and comparative example are listed in Table 4.

Table 4 lists the performance test results of the low-magnetostriction oriented silicon steel plates of Examples 1-6 and the comparative oriented silicon steel plates of Comparative Examples 1-4.

Table 4.

| No. | Magnetostriction of the etched surface $L_{vA1}$ db(A) | Magnetostriction of the non-etched surface $L_{vA2}$ db(A) | $L_{vA2} - L_{vA1}$ db(A) | Average magnetostriction $L_{vA\ average}$ db(A) | Improvement rate of P17/50 (%) |
|---|---|---|---|---|---|
| Example 1 | 53.2 | 53.4 | 0.2 | 53.3 | 3.5 |
| Example 2 | 52.8 | 52.4 | 0.4 | 52.6 | 9.5 |
| Example 3 | 53.5 | 53.6 | 0.1 | 53.55 | 10.4 |
| Example 4 | 53.2 | 53.5 | 0.3 | 53.35 | 11 |
| Example 5 | 52.2 | 53.3 | 1.1 | 52.75 | 11.2 |
| Example 6 | 53.5 | 53.8 | 0.3 | 53.65 | 11.9 |
| Comparative Example 1 | 54.2 | 59.3 | ***5.1*** | ***56.75*** | 3.5 |
| Comparative Example 2 | 53.5 | 63.2 | ***9.7*** | ***58.35*** | 9.5 |
| Comparative Example 3 | 53.5 | 64.5 | ***11*** | ***59*** | 11 |
| Comparative Example 4 | 53 | 65.5 | ***12.5*** | ***59.25*** | 11.8 |

Correspondingly, 240KVA three-phase transformers were further prepared by using the low-magnetostriction oriented silicon steel plates of Examples 1-6 and the comparative oriented silicon steel plates of Comparative Examples 1-4, respectively. Noise test was carried out on each three-phase transformer prepared in examples and comparative examples under magnetizative conditions of 50Hz and 1.7T (GB/T 1094. 10-2003) and the test results are listed in Table 5.

Table 5 lists the noise test results of 240KVA three-phase transformers prepared using low-magnetostriction oriented silicon steel plates of Examples 1-6 and comparative oriented silicon steel plates of Comparative Examples 1-4.

Table 5.

| No. | Noise dB(A) |
|---|---|
| Example 1 | 54.5 |
| Example 2 | 54 |
| Example 3 | 54.3 |
| Example 4 | 55.9 |
| Example 5 | 56 |
| Example 6 | 56.2 |
| Comparative Example 1 | 58.5 |
| Comparative Example 2 | 60.6 |
| Comparative Example 3 | 60.2 |
| Comparative Example 4 | 60.4 |

As can be seen from Tables 4 and 5, compared to Comparative Examples 1-4, the performance of each example of the present invention is superior. The magnetostriction deviation between the etched surface and the non-etched surface of the low-magnetostriction oriented silicon steel in each example is significantly smaller than that of the comparative oriented silicon steel plate in Comparative Examples 1-4.

Specifically, as shown in Table 4, the magnetostriction deviation between the etched surface and the non-etched surface of the low-magnetostriction oriented silicon steel in Examples 1-6 is $\leq$ 2db (A), with an average magnetostriction $\leq$ 55db(A). Correspondingly, as shown in Table 5, the overall noise level of the 240KVA three-phase transformers made with the low-magnetostriction oriented silicon steel plate of Examples 1-6 is significantly lower compared to those made with Comparative Examples 1-4.

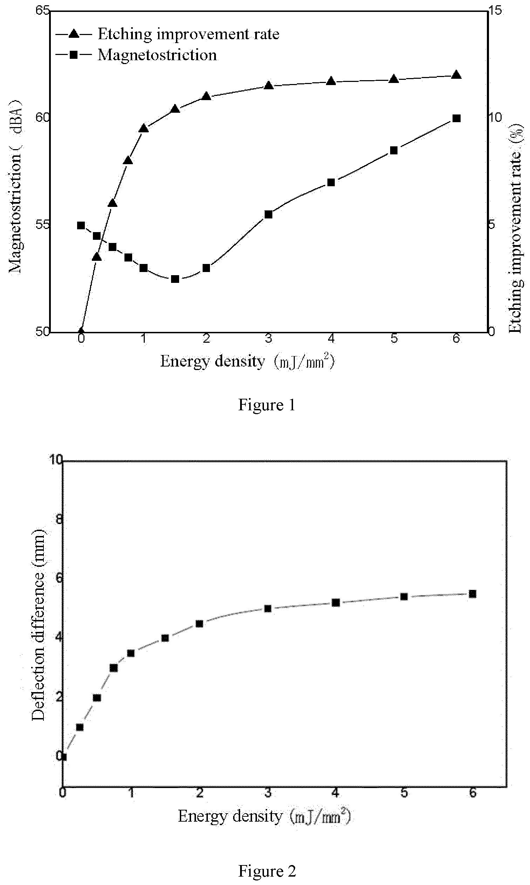

Figure 1 schematically shows a curve of magnetostriction and magnetic improvement rate of the etched surface of the low-magnetostriction oriented silicon steel plate according to the present invention with varying energy density of laser etching.

As shown in Figure 1, with the increase of energy density of laser etching, the improvement rate of the magnetic properties of the low-magnetostriction oriented silicon steel plate initially increases and then tends to be stable, while the magnetostriction performance initially decreases and then increases.

Figure 2 schematically shows a curve of the deflection difference between the etched surface and non-etched surface with varying energy density of laser etching, after single-sided laser etching of the silicon steel substrate of the present invention with equal coating amounts on two surfaces.

As shown in Figure 2, after single-sided laser etching on the silicon steel substrate with equal amount of the insulating coating on both sides, with the increase of energy density of laser etching, the deflection difference between the etched surface and the non-etched surface of the silicon steel substrate initially increases and then tends to be stable.

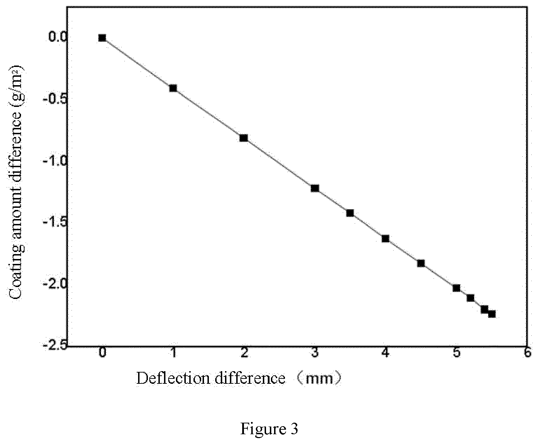

Figure 3 schematically shows a coating amount difference in the insulating coatings between the to be etched surface and the non-etched surface required to maintain flatness of the low-magnetostriction oriented silicon steel according to the present invention under different deflection conditions.

As shown in Figure 3, to maintain flatness of the oriented silicon steel product and reduce the magnetostriction deviations between two surfaces, the coating amount difference between the surface to be etched and the non-etched surface needs to be adjusted according to the deflection difference caused by laser etching.

In summary, according to the deflection difference between the etched surface that is subjected to laser etching and the non-etched surface of the silicon steel substrate with consistent coating amounts on two surfaces, the manufacturing method for low-magnetostriction oriented silicon steel in the present invention allows for adjusting the coating amount difference in the insulating coatings between the surface to be etched and the non-etched surface of the silicon steel substrate prepared by the same process, thereby reducing the magnetostriction deviation between the etched surface and the non-etched surface of the oriented silicon steel obtained by laser etching with the same energy density.

The low-magnetostriction oriented silicon steel prepared by the above-mentioned manufacturing method can ensure that the magnetostriction deviation between the etched surface and the non-etched surface of the oriented silicon steel is $\leq$ 2db(A) and the average magnetostriction is $\leq$ 55db(A). Transformers with iron cores made from this low-magnetostriction oriented silicon steel exhibit lower vibration, thus reducing the overall noise level of transformers equipped with these cores.

It should be noted that the prior art part in the scope of protection of the present invention is not limited to the embodiments provided in the application document. All prior art that does not conflict with the solution of the present invention, including but not limited to prior patents, publications, and known uses, falls within the scope of protection of the present invention.

Moreover, the combination of technical features of the present invention is not limited to the combinations listed in the claims or the specific embodiments. All technical features of the present invention can be freely combined unless they conflict.

It should also be noted that the embodiments listed above are only specific examples of the present invention. It is obvious that the present invention is not limited to the above embodiments. Similar variations or modifications directly derived or thought of by those skilled in the art from the disclosed content of present invention shall all fall within the protection scope of the present invention.

**Claims**

1. A manufacturing method for oriented silicon steel plate, comprising the following steps: (a) smelting and casting; (b) heating; (c) normalizing; (d) cold rolling; (e) decarburization annealing; (f) final annealing; (g) hot stretch annealing comprising applying an insulating coating; wherein step (g) comprises:

   (1) applying an insulating coating component on two surfaces of a silicon steel substrate A by an equal coating amount V;
   (2) sintering and cooling to form an insulating coating on each of two surfaces of the silicon steel substrate A;
   (3) performing single-sided laser etching on one surface with insulating coating of the silicon steel substrate A, defining this single-sided laser etched surface as a first surface, and defining the surface opposite to the first surface as a second surface;
   (4) measuring a deflection difference between the first surface and the second surface, and determining a coating amount difference $\Delta V$ between the insulating coatings based on the deflection difference; and
   (5) according to the coating amount difference $\Delta V$, forming the insulating coatings on two surfaces of the silicon steel substrate B obtained through steps (a)-(f), wherein a coating amount of the insulating coating on a surface to be laser etched is V, and a coating amount of the insulating coating on a surface that do not undergo laser etching is V+|ΔV|.

2. The manufacturing method according to claim 1, wherein in step (4), the coating amount difference ΔV is determined based on the following formula:

coating amount difference $\Delta V = 3 \times 10^{-5} - 0.407 \times$ deflection difference $\pm 0.1$; preferably, coating amount difference $\Delta V = 3 \times 10^{-5} - 0.407 \times$ deflection difference; a unit of the coating amount difference is $g/m^2$, and a unit of the deflection difference is mm.

3. The manufacturing method according to claim 1, wherein in step (3), the laser power X of the single-sided laser etching is determined based on the following formula:

set magnetostriction target value = $- 0.0006 \times X^5 + 0.012 \times X^4 - 0.04 \times X^3 - 0.18 \times X^2 + 0.37 \times X + 54.8$; and/or,
set improvement rate of iron loss $P_{17/50}$ before and after laser etching = $- 0.177 \times X^2 + 3.2 \times X - 2.4$;
wherein, a unit of the magnetostriction target value is db(A), and a unit of the laser power is $mJ/mm^2$.

4. The manufacturing method according to claim 1, wherein in percentage by mass, the insulating coating component comprises:

at least one selected from aluminum dihydrogen phosphate and magnesium dihydrogen phosphate: 2%-25%;
colloidal $SiO_2$: 4%-16%;
chromic anhydride: 0.15%-4.50%; and
the balance being water and inevitable impurities.

5. The manufacturing method according to claim 1, wherein in step (1), the coating amount V is 4.0-4.5 $g/m^2$.

6. The manufacturing method according to claim 1, wherein in step (b): firstly, heating the silicon steel substrate to 800-900°C and holding it for 10-30 seconds, then cooling it to room temperature at a cooling rate of 5-50°C/s.

7. The manufacturing method according to claim 1, wherein the manufacturing method satisfies one or more of the following processes:

in step (c), adopting a two-stage normalizing treatment: firstly, heating the steel plate to 1100-1200°C, then cooling it to 900-1000°C at a cooling rate of 1-10°C/s; and subsequently cooling it to room temperature at a cooling rate of 10-70°C/s;
in step (d), performing a cold rolling by adopting a one-step cold reduction or double cold reduction with an intermediate annealing step;
in step (e), the steel plate is subjected to a primary recrystallization annealing at 800-900°C, followed by application of an annealing isolation agent;
in step (f), an annealing temperature is 1100-1200°C, with a holding time of 20-30 hours.

8. An oriented silicon steel plate, wherein the oriented silicon steel plate is manufactured using the manufacturing method according to any one of claims 1-8.

9. The oriented silicon steel plate according to claim 8, wherein a thickness of the oriented silicon steel plate is 0.18mm-0.23mm.

10. The oriented silicon steel plate according to claim 8, wherein a magnetostriction deviation between an etched surface and a non-etched surface of the oriented silicon steel plate is smaller than or equal to 2 db(A), and an average magnetostriction of the oriented silicon steel plate is smaller than or equal to 55 db(A).

Figure 1

Figure 2

Figure 3

## INTERNATIONAL SEARCH REPORT

International application No.

**PCT/CN2023/099929**

### A. CLASSIFICATION OF SUBJECT MATTER

B23K26/00(2014.01)i; B23K26/362(2014.01)i; C21D1/26(2006.01)i; C21D6/00(2006.01)i; C21D8/12(2006.01)i; C21D9/00(2006.01)i; C22C38/00(2006.01)i; C22C38/02(2006.01)i; C22C38/04(2006.01)i; H01F1/18(2006.01)i

According to International Patent Classification (IPC) or to both national classification and IPC

### B. FIELDS SEARCHED

Minimum documentation searched (classification system followed by classification symbols)

IPC:B23K C21D C22C H01F

Documentation searched other than minimum documentation to the extent that such documents are included in the fields searched

Electronic data base consulted during the international search (name of data base and, where practicable, search terms used)

CNTXT, SIPOABS, DWPI, CNKI: 硅钢, 电磁钢, 电工钢, 激光, 功率, 刻蚀, 刻痕, 划线, 槽, 绝缘, 涂层, 膜, 张力, 应力, 磁致伸缩, 磁畴, 挠度, 翘曲, 翘起, 弯曲, 不平坦, 挠曲, 厚度, 涂覆量, 差, 退火, steel, silicon, laser, power, etching, scoring, groove?, insulat+, coating, film?, tension+, stress+, magnetostrict+, magnetic domain?, deflection, curve, bend, thickness, amount, magnitude, differ+, anneal+

### C. DOCUMENTS CONSIDERED TO BE RELEVANT

| Category* | Citation of document, with indication, where appropriate, of the relevant passages | Relevant to claim No. |
|---|---|---|
| PX | CN 114762911 A (BAOSHAN IRON & STEEL CO., LTD.) 19 July 2022 (2022-07-19) claims 1-12 | 1-10 |
| PX | WO 2022148468 A1 (BAOSHAN IRON & STEEL) 14 July 2022 (2022-07-14) claims 1-12 | 1-10 |
| Y | CN 114561512 A (WUHAN IRON & STEEL CO., LTD.) 31 May 2022 (2022-05-31) description, paragraphs 9-40 | 1, 4-10 |
| A | CN 114561512 A (WUHAN IRON & STEEL CO., LTD.) 31 May 2022 (2022-05-31) description, paragraphs 9-40 | 2, 3 |
| Y | CN 103080352 A (JFE STEEL CORP.) 01 May 2013 (2013-05-01) description, paragraphs 40-45 | 1, 4-10 |
| A | CN 103080352 A (JFE STEEL CORP.) 01 May 2013 (2013-05-01) description, paragraphs 40-45 | 2, 3 |

☑ Further documents are listed in the continuation of Box C.  ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **14 July 2023** | **19 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| International application No. |
|---|
| **PCT/CN2023/099929** |

**C. DOCUMENTS CONSIDERED TO BE RELEVANT**

| Category* | Citation of document, with indication, where appropriate, of the relevant passages | Relevant to claim No. |
|---|---|---|
| A | CN 105220071 A (BAOSHAN IRON & STEEL CO., LTD.) 06 January 2016 (2016-01-06)<br>entire document | 1-10 |
| A | CN 105339510 A (JFE STEEL CORP.) 17 February 2016 (2016-02-17)<br>entire document | 1-10 |
| A | CN 106460111 A (NIPPON STEEL & SUMITOMO METAL CORP.) 22 February 2017<br>(2017-02-22)<br>entire document | 1-10 |
| A | CN 107210109 A (JFE STEEL CORP.) 26 September 2017 (2017-09-26)<br>entire document | 1-10 |
| A | JP 2009263782 A (JFE STEEL CORP.) 12 November 2009 (2009-11-12)<br>entire document | 1-10 |
| A | JP 2012052233 A (JFE STEEL CORP.) 15 March 2012 (2012-03-15)<br>entire document | 1-10 |
| A | US 4363677 A (NIPPON STEEL CORP.) 14 December 1982 (1982-12-14)<br>entire document | 1-10 |

Form PCT/ISA/210 (second sheet) (July 2022)

International application No.

**PCT/CN2023/099929**

| Patent document cited in search report | | | Publication date (day/month/year) | Patent family member(s) | | | Publication date (day/month/year) |
|---|---|---|---|---|---|---|---|
| CN | 114762911 | A | 19 July 2022 | CN | 114762911 | B | 09 May 2023 |
| WO | 2022148468 | A1 | 14 July 2022 | None | | | |
| CN | 114561512 | A | 31 May 2022 | None | | | |
| CN | 103080352 | A | 01 May 2013 | EP | 2602343 | A1 | 12 June 2013 |
| | | | | EP | 2602343 | A4 | 31 May 2017 |
| | | | | EP | 2602343 | B1 | 26 February 2020 |
| | | | | US | 2013143003 | A1 | 06 June 2013 |
| | | | | US | 9240266 | B2 | 19 January 2016 |
| | | | | MX | 2013000419 | A | 07 February 2013 |
| | | | | MX | 342804 | B | 13 October 2016 |
| | | | | BR | 112013004050 | A2 | 05 July 2016 |
| | | | | BR | 112013004050 | B1 | 02 July 2019 |
| | | | | WO | 2012017671 | A1 | 09 February 2012 |
| | | | | JP | 2012052228 | A | 15 March 2012 |
| | | | | JP | 5866850 | B2 | 24 February 2016 |
| | | | | KR | 20130048774 | A | 10 May 2013 |
| | | | | KR | 101530450 | B1 | 22 June 2015 |
| | | | | CN | 103080352 | B | 20 May 2015 |
| | | | | IN | 201202898 | P3 | 23 May 2014 |
| | | | | IN | 353440 | B | 18 December 2020 |
| CN | 105220071 | A | 06 January 2016 | CN | 105220071 | B | 30 March 2018 |
| CN | 105339510 | A | 17 February 2016 | JP | 2015004090 | A | 08 January 2015 |
| | | | | JP | 5668795 | B2 | 12 February 2015 |
| | | | | WO | 2014203464 | A1 | 24 December 2014 |
| | | | | WO | 2014203464 | A8 | 19 November 2015 |
| | | | | KR | 20160009707 | A | 26 January 2016 |
| | | | | KR | 101607909 | B1 | 31 March 2016 |
| | | | | US | 2016133368 | A1 | 12 May 2016 |
| | | | | US | 10559410 | B2 | 11 February 2020 |
| | | | | RU | 2620833 | C1 | 30 May 2017 |
| | | | | EP | 3012332 | A1 | 27 April 2016 |
| | | | | EP | 3012332 | A4 | 08 June 2016 |
| | | | | EP | 3012332 | B1 | 04 July 2018 |
| | | | | IN | 201503387 | P3 | 22 July 2016 |
| | | | | IN | 403398 | B | 19 August 2022 |
| CN | 106460111 | A | 22 February 2017 | KR | 20160145654 | A | 20 December 2016 |
| | | | | KR | 101907768 | B1 | 12 October 2018 |
| | | | | JPWO | 2015170755 | A1 | 20 April 2017 |
| | | | | JP | 6315084 | B2 | 25 April 2018 |
| | | | | RU | 2016144288 | A | 13 June 2018 |
| | | | | RU | 2016144288 | A3 | 03 September 2018 |
| | | | | EP | 3141626 | A1 | 15 March 2017 |
| | | | | EP | 3141626 | A4 | 22 November 2017 |
| | | | | EP | 3141626 | B1 | 26 February 2020 |
| | | | | US | 2017182591 | A1 | 29 June 2017 |
| | | | | US | 10610964 | B2 | 07 April 2020 |
| | | | | WO | 2015170755 | A1 | 12 November 2015 |
| | | | | BR | 112016025466 | A2 | 15 August 2017 |
| | | | | BR | 112016025466 | B1 | 23 February 2021 |

Form PCT/ISA/210 (patent family annex) (July 2022)

**INTERNATIONAL SEARCH REPORT**
Information on patent family members

International application No.

**PCT/CN2023/099929**

| Patent document cited in search report | | | Publication date (day/month/year) | Patent family member(s) | | | Publication date (day/month/year) |
|---|---|---|---|---|---|---|---|
| | | | | PL | 3141626 | T3 | 27 July 2020 |
| | | | | CN | 106460111 | B | 22 January 2019 |
| | | | | IN | 201617036670 | A | 24 March 2017 |
| | | | | JP | 6315084 | B2 | 25 April 2018 |
| | | | | RU | 2665666 | C2 | 03 September 2018 |
| | | | | IN | 427380 | B | 31 March 2023 |
| CN | 107210109 | A | 26 September 2017 | RU | 2676372 | C1 | 28 December 2018 |
| | | | | JPWO | 2016125504 | A1 | 08 June 2017 |
| | | | | JP | 6191789 | B2 | 06 September 2017 |
| | | | | US | 2021310096 | A1 | 07 October 2021 |
| | | | | US | 11572602 | B2 | 07 February 2023 |
| | | | | EP | 3255640 | A1 | 13 December 2017 |
| | | | | EP | 3255640 | A4 | 03 January 2018 |
| | | | | EP | 3255640 | B1 | 02 November 2022 |
| | | | | KR | 20170106401 | A | 20 September 2017 |
| | | | | KR | 101952237 | B1 | 26 February 2019 |
| | | | | WO | 2016125504 | A1 | 11 August 2016 |
| | | | | WO | 2016125504 | A8 | 08 June 2017 |
| | | | | US | 2018119244 | A1 | 03 May 2018 |
| | | | | IN | 201727025331 | A | 10 November 2017 |
| | | | | CN | 107210109 | B | 24 September 2019 |
| JP | 2009263782 | A | 12 November 2009 | JP | 5446377 | B2 | 19 March 2014 |
| JP | 2012052233 | A | 15 March 2012 | JP | 5594252 | B2 | 24 September 2014 |
| US | 4363677 | A | 14 December 1982 | EP | 0033878 | A2 | 19 August 1981 |
| | | | | EP | 0033878 | A3 | 30 September 1981 |
| | | | | EP | 0033878 | B1 | 01 August 1984 |
| | | | | DE | 3165139 | D1 | 06 September 1984 |
| | | | | EP | 0087587 | A1 | 07 September 1983 |
| | | | | EP | 0087587 | B1 | 05 April 1989 |
| | | | | JP | S56105420 | A | 21 August 1981 |
| | | | | JP | S56105424 | A | 21 August 1981 |
| | | | | JP | S56123325 | A | 28 September 1981 |
| | | | | JP | S5753419 | B2 | 14 December 1982 |
| | | | | JP | S5753419 | B2 | 12 November 1982 |
| | | | | JP | S5850297 | B2 | 09 November 1983 |
| | | | | JP | S5850298 | B2 | 09 November 1983 |
| | | | | DE | 3177027 | D1 | 11 May 1984 |
| | | | | DE | 3177027 | D1 | 11 May 1989 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107210109 A
- CN 106460111 A

- CN 106029917 A